# EUROPEAN PATENT SPECIFICATION

(11) **EP 1 161 870 B1**
(45) Date of publication and mention of the grant of the patent: **21.07.2004**
(21) Application number: 01113127.3
(22) Date of filing: 29.05.2001
(51) Int. Cl.: A21C 15/00

(54) **Separation of baked breads**
Trennung von gebackenen Brotlaiben
Séparation de miches de pain cuites

(30) Priority: 06.06.2000 DK 200000873
(43) Date of publication of application: 12.12.2001
(73) Proprietor: Danmatic, automated Bakery Systems A/S, 8800 Viborg (DK)
(72) Inventor: Gregersen, Claus Lykke, 8800 Viborg (DK)
(74) Representative: Nielsen, Leif L.

(56) References cited:
- EP-A- 0 343 905
- DE-A- 1 532 917
- FR-A- 2 371 881
- GB-A- 226 325
- GB-A- 2 155 426

## Description

The present invention relates to a facility for separating baked bread leaving a baking oven in a coherent line while being supported by a conveyor. Furthermore, the invention concerns a method for separating the breads.

When breads are baked on industrial scale, these are usually disposed side by side on baking sheets and leave or are taken out from the oven in a coherent row or line where the breads are disposed juxtaposed with cohering longitudinal sides (DE A-153 2917). Until now, it has been common to manually separate such a row of breads for subsequent leading the breads to a cooling unit and a packing unit.

It has also been attempted to perform automatic separation of the breads when these have left the baking oven. Until today, however, no suitable facilities have been provided for such automatic separation.

It is the purpose with the present invention to provide a facility and a method which can be used in automatic separation of bread in a bakery in-line between the oven and cooling units. Furthermore, it is a purpose that the breads after separation are disposed so that they may be handled by automatic handling equipment by subsequent cooling and packing of the breads.

According to the present invention, this is achieved with a facility of the kind mentioned in the introduction, which is peculiar in that at the sides of the conveyor, there are provided gripping means acting in pairs and arranged for engaging ends of a bread in the line, that each gripping means is arranged for being displaced perpendicularly to the conveyor for engaging the breads and for individual displacement in the longitudinal direction of the conveyor for separating the breads as interacting gripping means are arranged for performing the displacement in two steps.

The method according to the invention is peculiar in that the ends of each bread is gripped, that the ends of two coherent breads are pulled from each other alternatingly at one and at the other side of the row in a first step, and that the remaining coherent ends are pulled apart in a second step whereby the breads are disposed spaced apart side by side.

Each pair of interacting gripping means are attached to the ends of each bread. This may occur by means of suitable engaging means. In practice it has appeared possible to use needles which are inserted into the end of the bread without the holes becoming visible in the finished bread. It is assumed that the breads are so hot during and after the separation that they bake a little more, thus causing closing of the needle holes.

The positioning of the breads relative to the gripping means may be achieved by means of a sensor registering the presence of the bread and/or a mechanical stop to which the first bread in the line in brought into abutment against. After the breads having been positioned and caught by the gripping means, an individual displacement of the gripping means in the longitudinal direction of the conveyor and thereby in longitudinal direction of the line is performed.

The individual displacement of the engaging means is thus performed so that two adjacent breads are pulled from each other alternatingly at one and the other side of the line. When the alternating separation has occurred in a first step, the breads will appear with a zigzag pattern as seen from above where they are alternatingly coherent at opposite ends.

In a second step, the other gripping means are displaced so the they again are aligned with their interacting gripping means at a position perpendicular to the conveyor and thereby perpendicular to the longitudinal direction of the line. Hereby, the breads will now be disposed with mutual spacing and in parallel and with orientation perpendicular to the conveyor. As all the gripping means are then activated for displacement perpendicularly to the conveyor belt for releasing the engagement with the breads, these may be conveyed further on the conveyor belt in a line where they are now placed with uniform mutual distance. This is not only suitable with regard to the subsequent handling in automatic handling equipment but will simultaneously ensure a uniform and effective cooling of all the breads when they are conveyed into a cooling unit afterwards.

The facility may be provided for one coherent line of breads or may be arranged for handling several parallel lines of bread.

A control unit may be provided for actuating the transport and the elements used in the gripping means. The control unit will preferably be a PLC controller. However, other suitable control means may be used.

The gripping means preferably comprise a first cylinder oriented perpendicularly to the conveyor. At its piston, this cylinder is provided with a plate member on which needles are mounted. Two needles are preferably used but other numbers are also possible. By activating the cylinder, the needles may be inserted into or pulled out from the ends of the bread at a time determined by signals from the PLC. The cylinder may be pneumatically or electrically activated. Any other means than needles may be used for engaging the breads, e.g. suction cups or similar means that may grip the breads without damaging these.

The gripping means furthermore comprises a second cylinder extending in parallel with the conveyor. This cylinder may also be driven pneumatically or electrically. This cylinder will be mounted directly on a gripping means or a slide onto which the gripping means is mounted. When activated, the piston of the cylinder will press against an adjacent slide or an adjacent gripping means for establishing the separation. Every other of these cylinders at each side of the bread line is activated in a first step for establishing the separation of the zigzag pattern. In a subsequent step, the intermediate cylinders are activated. After the breads have been separated and the first cylinders deactivated, the other cylinders are deactivated so that they are again disposing all the gripping means at each side in close mutual association while the slides are reciprocating back to the starting position and are ready for handling a new line of bread. As alternative to the cylinders, there may be provided another type of actuator enabling the reciprocating movement.

If the gripping means at each side of the bread line are arranged on a common support displaceable in parallel with the conveyor, it will be possible to perform a reciprocating movement of the gripping means synchronised with the movement of the conveyor.

The invention will be explained in more detail below hereafter with reference to the accompanying drawing where:
- Fig. 1: shows a schematic view of a facility according to the invention,
- Figs. 2-4: show different steps when using a facility according to the invention,
- Figs. 5-7: show three mutually perpendicular views of a gripping means forming part of a facility according to the invention, and
- Fig. 8: shows a side view of the facility.

As the different Figures of the drawing are identical or corresponding elements are provided with the same reference number, no special explanation is given in connection with each single Figure.

Certain elements, such as sensors, connection lines, cables, control unit and other elements necessary for a functioning plant are omitted from the drawing for clarity reasons.

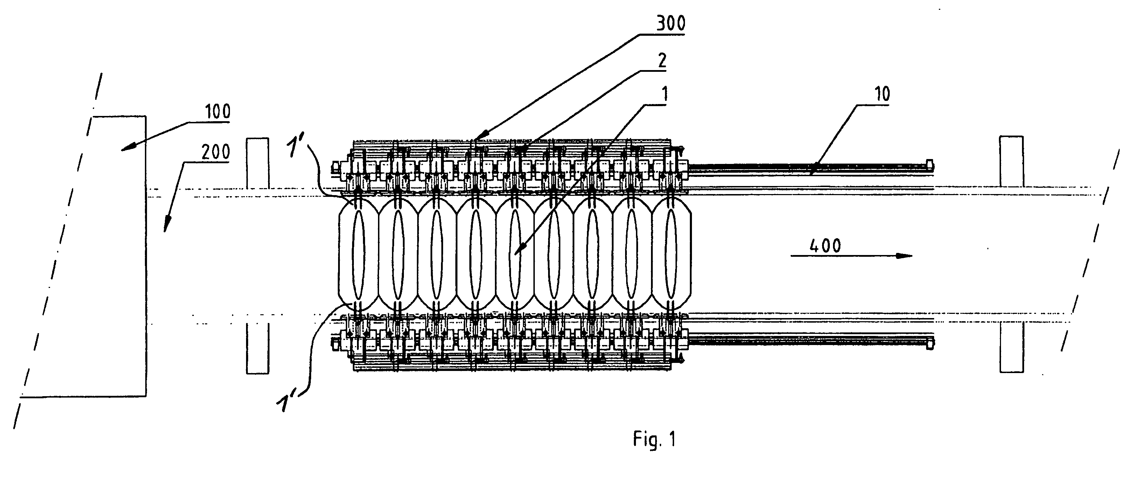

In Fig. 1 is illustrated a depaner 100 which via a conveyor 200 is led through separating stations 300 used for separating the breads. In the situation shown, a single conveyor 200 is shown. Alternatively, it is possible to use a two-piece conveyor 200, the parallel lines of breads of which are advanced from the depaner 100. Each line of bread 1 is then conveyed on each their conveyor with the ends 1' of the breads oriented perpendicularly to the longitudinal direction 400 of the conveyor.

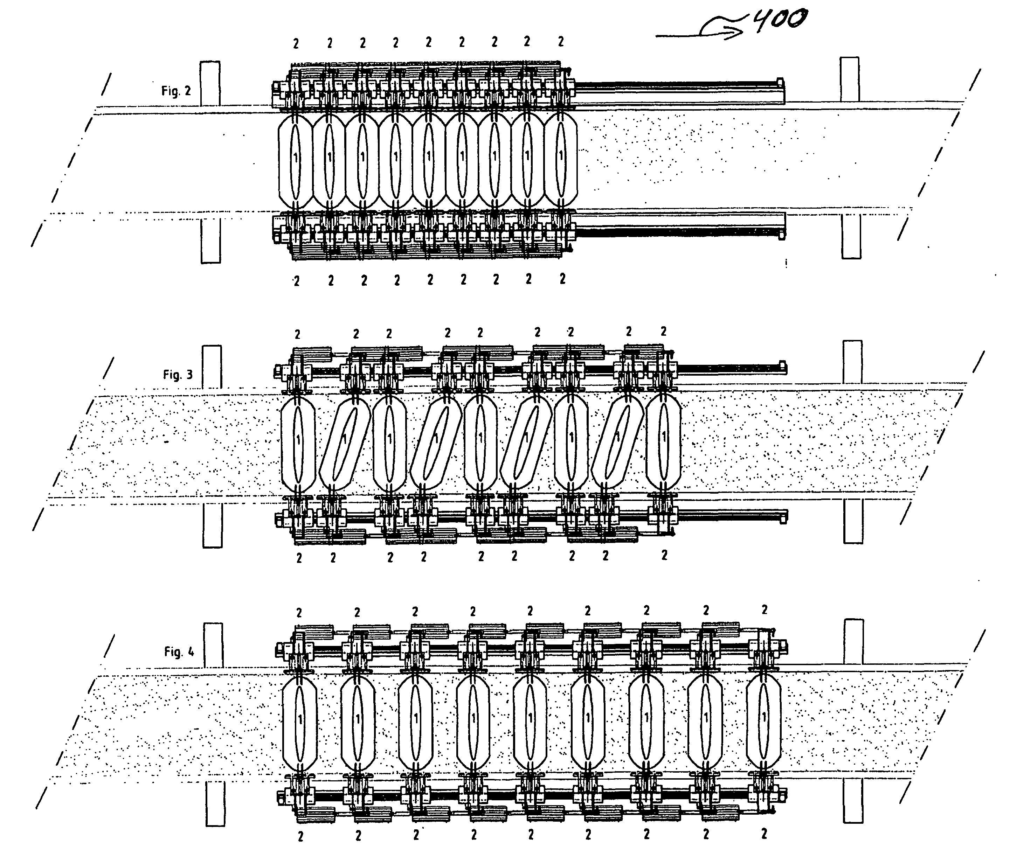

A explanation with reference to Figs. 2-4 is given below of the way in which the breads are separated.

On Fig. 2, ends 1' of breads 1 are engaged by gripping means 2 which are interacting in pairs for gripping each bread in the row, the means 2 being disposed close together. The breads are then displaced by establishing a separation at every other interspace between the gripping means 2. This occurs in a staggered way at the side in a first step illustrated in Fig. 3. By this mutual displacement of close-lying gripping means, a partial separation of the breads takes place, the breads thus appearing coherent in a zigzag pattern.

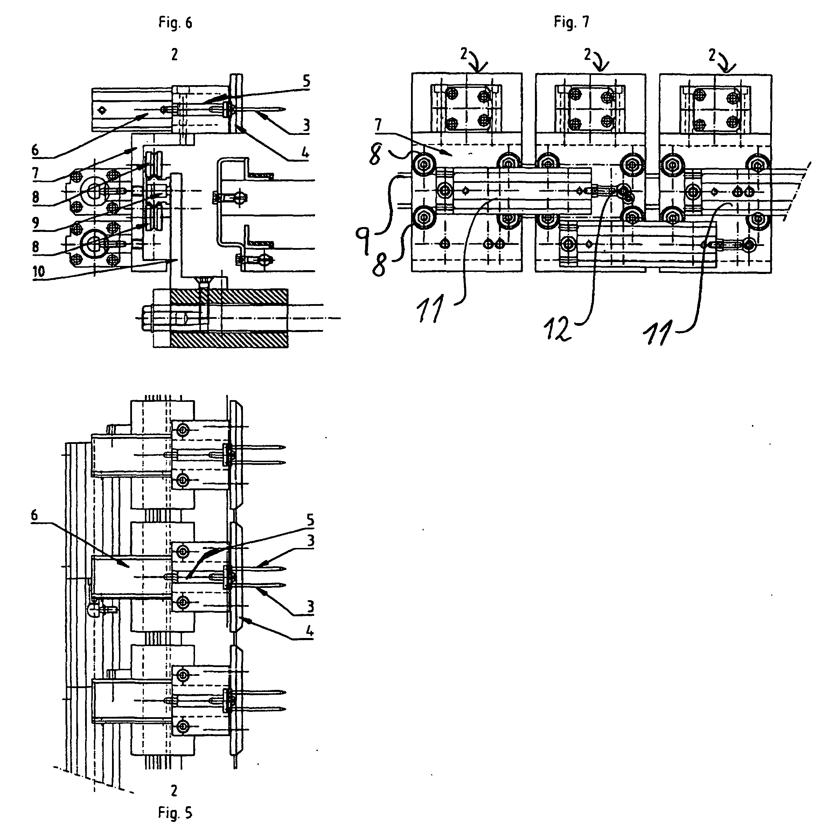

In a subsequent step, which is finished in Fig. 4, the gripping means lying in-between are displaced for performing a total separation and then placing the breads with a parallel orientation and disposed perpendicularly to the longitudinal direction 400 of the conveyor. Subsequent to the situation shown in Fig. 4, the gripping means will be disengaged from the breads and return to the position shown in Fig. 1 where they are disposed close to each other.

Appearing from Figs. 5-7, each gripping means 2 is provided with two needles 3 intended to penetrate into the ends of the bread 1. The needles 3 are placed on a plate member 4, which is mounted on the piston 5 of a cylinder 6. The cylinder may be driven pneumatically or electrically. The cylinder 6 is mounted on a slide 7 which via rollers 8 is running on a rail 9 mounted on the machine frame 10 for displacement in the longitudinal direction 400 of the conveyor. The gripping means may thus displace the needles 3 in direction perpendicular to the longitudinal direction of the conveyor 400 simultaneously with the slide 7 being displaced in the longitudinal direction 400 of the conveyor.

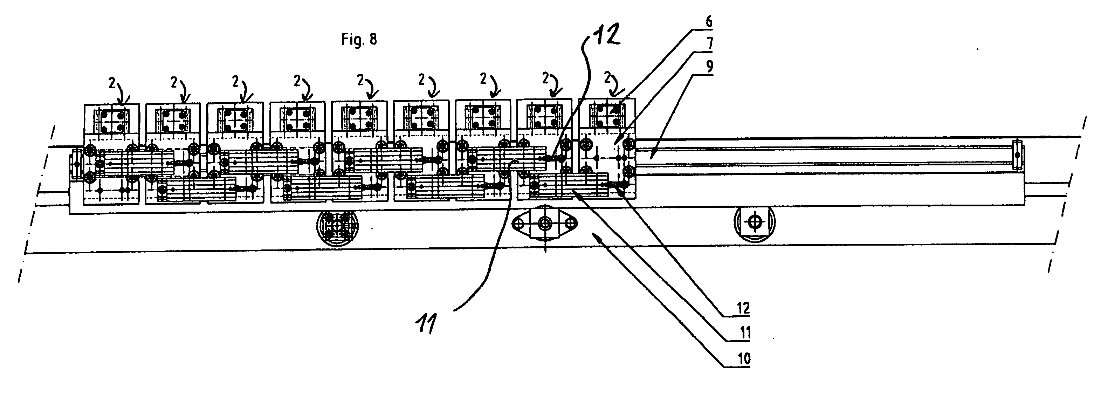

As is particularly appears from Fig. 8, a mutual displacement of the slides 7 is established as cylinders 11 are provided on each single slide. A cylinder 11 is connected with an adjacent slide 7 through its piston 12. By extending and retracting, respectively, of the piston 12 it is thus possible to establish the mutual displacement between two succeeding slides and thereby of two succeeding gripping means. The cylinders 11 may, like the cylinders 6, be driven pneumatically or electrically. Both cylinders 6 and 11 are activated as a result of signals for a control unit (not shown).

After registering a line of bread in a correct position, the control unit will, as shown in Fig. 2, activate the gripping means so that the needles are inserted into the ends 1' of the breads, after which every other cylinder 11 is activated for establishing the situation shown in Fig. 3. Then the intermediate cylinders 11 are activated for establishing the situation shown in Fig. 4. By this displacement, slides 7 are displaced along the rail 9 on the machine frame 10. After separating the breads, the cylinder 6 is activated for withdrawing the needles 6. Then all the cylinders 11 are reactivated for withdrawing the pistons 12 so that the components of the facility assume the position shown in Fig. 2.

## Claims

1. A facility for separating baked bread leaving a baking oven in a coherent line while being supported by a conveyor, **characterised in that** at the sides of the conveyor, there are provided gripping means acting in pairs and arranged for engaging ends of a bread in the line, that each gripping means is arranged for being displaced perpendicularly to the conveyor for engaging the breads and for individual displacement in the longitudinal direction of the conveyor for separating the breads as interacting gripping means are arranged for performing the displacement in two steps.

2. A facility according to claim 1, **characterised in that** each gripping means comprises a slide provided with a first cylinder, which is oriented perpendicularly to the conveyor and carrying needles that may be inserted into the ends of the bread, and a second cylinder disposed in parallel with the conveyor and connected to an adjacent slide for establishing the separation.

3. A facility according to claim 1, **characterised in that** the gripping means comprise suction cups.

4. A facility according to any preceding claim, **characterised in that** the gripping means at each side of the bread line are arranged on a common support which is displaceable in parallel with the conveyor.

5. A facility according to any preceding claim, **characterised in that** it comprises a control unit for controlling the movement of the gripping means.

6. A method for separating baked breads leaving a baking oven in a coherent line while being supported by a conveyor, **characterised in that** the ends of each bread is gripped, that the ends of two coherent breads are pulled apart alternatingly at one and at the other side of the line in a first step, and that the remaining coherent ends are pulled apart in a second step whereby the breads are disposed spaced apart side by side.

7. A method according to claim 6, **characterised in that** the movement of the gripping means is established by electric or pneumatic activation.

8. A method according to claim 6 or 7, **characterised in that** the ends of the bread is gripped by needles in a gripping means which is displaced perpendicularly to conveyor for engaging the needles, and that the gripping means are imparted individual displacement in the longitudinal direction for separating the breads.

9. A method according to any of claims 6 - 8, **characterised in that** the separating is performed in-line between baking and cooling of the breads.

10. A method according to any of claims 6-8, **characterised in that** the single steps are controlled by an electronic control unit.

## Patentansprüche

1. Anlage zum Trennen gebackenen Brots, das einen Backofen in einer zusammenhängenden Reihe verlässt und dabei von einer Fördereinrichtung unterstützt ist, **dadurch gekennzeichnet, dass** an den Seiten der Fördereinrichtung Greifeinrichtungen vorgesehen sind, die paarweise wirken und so angeordnet sind, dass sie Enden eines Brots in der Reihe ergreifen, und dass jede Greifeinrichtung so beschaffen ist, dass sie senkrecht zu der Fördereinrichtung verlagert wird, um mit den Broten in Eingriff zu gelangen, und einzeln in Längsrichtung der Fördereinrichtung verlagert wird, um die Brote zu trennen, wobei zusammenwirkende Greifeinrichtungen so beschaffen sind, dass sie die Verlagerung in zwei Schritten ausführen.

2. Anlage nach Anspruch 1, **dadurch gekennzeichnet, dass** jede Greifeinrichtung einen Läufer umfasst, der versehen ist mit einem ersten Zylinder, der senkrecht zu der Fördereinrichtung orientiert ist und Nadeln trägt, die in die Enden des Brots eingesteckt werden können, sowie mit einem zweiten Zylinder, der parallel zu der Fördereinrichtung angeordnet und mit einem benachbarten Läufer verbunden ist, um die Trennung vorzunehmen.

3. Anlage nach Anspruch 1, **dadurch gekennzeichnet, dass** die Greifeinrichtung Saugkappen umfasst.

4. Anlage nach einem vorhergehenden Anspruch, **dadurch gekennzeichnet, dass** die Greifeinrichtungen auf jeder Seite der Brotreihe auf einem gemeinsamen Träger angeordnet sind, der parallel zu der Fördereinrichtung verlagert werden kann.

5. Anlage nach einem vorhergehenden Anspruch, **dadurch gekennzeichnet, dass** sie eine Steuereinheit umfasst, die die Bewegung der Greifeinrichtungen steuert.

6. Verfahren zum Trennen gebackenen Brots, das einen Backofen in einer zusammenhängenden Reihe verlässt und dabei von einer Fördereinrichtung unterstützt ist, **dadurch gekennzeichnet, dass** die Enden jedes Brots ergriffen werden, dass in einem ersten Schritt die Enden zweier zusammenhängender Brote abwechselnd auf der einen und der anderen Seite der Reihe auseinandergezogen werden und dass in einem zweiten Schritt die jeweils verbleibenden zusammenhängenden Enden auseinandergezogen werden, wodurch die Brote in gegenseitigem Abstand nebeneinander angeordnet werden.

7. Verfahren nach Anspruch 6, **dadurch gekennzeichnet, dass** die Bewegung der Greifeinrichtungen durch elektrische Betätigung oder Druckluftbetätigung erzielt wird.

8. Verfahren nach Anspruch 6 oder 7, **dadurch gekennzeichnet, dass** die Enden des Brots durch Nadeln in einer Greifeinrichtung ergriffen werden, die senkrecht zu der Fördereinrichtung verlagert wird, um die Nadeln in Eingriff zu bringen, und dass die Greifeinrichtungen einzeln in Längsrichtung verlagert werden, um die Brote zu trennen.

9. Verfahren nach einem der Ansprüche 6-8, **dadurch gekennzeichnet, dass** die Trennung in der Herstellungslinie zwischen dem Backen und dem Kühlen der Brote erfolgt.

10. Verfahren nach einem der Ansprüche 6-8, **dadurch gekennzeichnet, dass** die einzelnen Schritte durch eine elektronische Steuereinheit gesteuert werden.

## Revendications

1. Installation pour séparer du pain cuit sortant d'un four, en ligne continue, et reposant sur un convoyeur, **caractérisée en ce que** sont prévus, sur les côtés du convoyeur, des dispositifs de préhension fonctionnant par paires et agencés pour coopérer avec les extrémités d'un pain de la ligne, **en ce que** chaque dispositif de préhension est conçu pour être déplacé perpendiculairement au convoyeur pour coopérer avec les pains et pour effectuer un déplacement individuel dans la direction longitudinale du convoyeur, pour séparer les pains, des dispositifs de préhension interagissant étant prévus pour assurer le déplacement en deux étapes.

2. Installation selon la revendication 1, **caractérisée en ce que** chaque dispositif de préhension comprend un élément coulissant équipé d'un premier cylindre, qui est orienté perpendiculairement au convoyeur et porte des aiguilles pouvant s'insérer dans les extrémités du pain, et d'un deuxième cylindre monté parallèlement à la bande transporteuse et relié à un élément coulissant adjacent pour effectuer la séparation.

3. Installation selon la revendication 1, **caractérisée en ce que** les dispositifs de préhension comprennent des ventouses.

4. Installation selon l'une quelconque des revendications précédentes, **caractérisée en ce que** les dispositifs de préhension, de chaque côté de la ligne de pains, sont montés sur un support commun qui peut se déplacer parallèlement au convoyeur.

5. Installation selon l'une quelconque des revendications précédentes, **caractérisée en ce qu'**elle comprend une unité de commande qui commande le déplacement des dispositifs de préhension.

6. Procédé pour séparer des pains cuits sortant d'un four, disposés en ligne continue, et reposant sur un convoyeur, **caractérisé en ce que** les extrémités de chaque pain sont saisies, **en ce que** les extrémités de deux pains collés sont séparées par traction, en alternance, d'un côté et de l'autre de la ligne, dans une première étape, et **en ce que** les extrémités collées restantes sont séparées par traction dans une deuxième étape, ce qui fait que les pains sont disposés côte à côte de façon espacée.

7. Procédé selon la revendication 6, **caractérisé en ce que** le déplacement des dispositifs de préhension intervient par activation électrique ou pneumatique.

8. Procédé selon la revendication 6 ou 7, **caractérisé en ce que** les extrémités du pain sont saisies par les aiguilles d'un dispositif de préhension qui est déplacé perpendiculairement au convoyeur pour coopérer avec les aiguilles, et **en ce que** les dispositifs de préhension sont amenés à se déplacer individuellement dans la direction longitudinale pour séparer les pains.

9. Procédé selon l'une quelconque des revendications 6 à 8, **caractérisé en ce que** la séparation s'effectue en ligne, entre la cuisson et le refroidissement des pains.

10. Procédé selon l'une quelconque des revendications 6 à 8, **caractérisé en ce que** les différentes étapes sont commandées par une unité électronique de commande.
